# EUROPÄISCHE PATENTSCHRIFT

(11) **EP 2 604 884 B1**
(45) Veröffentlichungstag und Bekanntmachung des Hinweises auf die Patenterteilung: **29.03.2017**
(21) Anmeldenummer: 12007176.6
(22) Anmeldetag: 17.10.2012
(51) Int. Cl.: F16F 13/10, F16F 13/14

(54) **Hydrolageranordnung und deren Verwendung**
Hydromount and use of same
Support hydraulique et son utilisation

(30) Priorität: 12.12.2011 DE 102011120726
(43) Veröffentlichungstag der Anmeldung: 19.06.2013
(73) Patentinhaber: Vibracoustic GmbH, 64293 Darmstadt (DE)
(72) Erfinder: Werner, Philipp, 21339 Lüneburg (DE); Breiden, Oliver, 21075 Hamburg (DE)
(74) Vertreter: Flügel Preissner Schober Seidel

(56) Entgegenhaltungen:
- EP-A1- 0 452 169
- EP-A1- 1 359 342
- EP-A2- 1 160 483
- DE-A1- 19 833 537
- JP-A- 2008 248 898
- US-A- 4 936 556

## Beschreibung

### Technisches Gebiet

Die Erfindung betrifft eine Hydrolageranordnung und deren Verwendung.

### Stand der Technik

Hydrolager gelangen häufig in Kraftfahrzeugen zur Anwendung, beispielsweise in Form von Hydrobuchsen als Hinterachsträgerlager oder als Motorlager, zur Abstützung einer Verbrennungskraftmaschine gegenüber einem Chassis.

Hydrolager weisen üblicherweise Membranen aus einem gummielastischen Werkstoff auf, die zusammen mit dem Hydrolagerkern und/oder dem Hydrolagergehäuse des Hydrolagers Fluidkammern begrenzen, die mit Dämpfungsflüssigkeit gefüllt sind. Während der bestimmungsgemäßen Verwendung des Hydrolagers wird durch eine dynamisch auf das Hydrolager einwirkende Kraft die Dämpfungsflüssigkeit zwischen den Fluidkammern in Bewegung versetzt, wobei die Fluidkammern durch einen Dämpfungskanal oder eine Drossel flüssigkeitsleitend miteinander verbunden sind. Durch die Bewegung der Dämpfungsflüssigkeit von einer Fluidkammer in die andere wird Energie in Wärme umgesetzt und ein Dämpfungs- bzw. Tilgungseffekt erzielt. Die in das Hydrolager eingeleiteten Schwingungen werden dadurch bedämpft. Während der bestimmungsgemäßen Verwendung des Hydrolagers sind die Membranen mechanischen Belastungen sowohl durch den innendruck der Dämpfungsflüssigkeit ausgesetzt als auch durch die Deformation des Hydrolagers selbst, aufgrund der Relativbewegung zwischen den verschiedenen Anbindungspunkten der Membranen.

Wirkt auf das Hydrolager zusätzlich zu den zuvor beschriebenen mechanischen Belastungen eine statische Vorlast, so werden die Membranen auch ohne dynamische Beanspruchung vorgedehnt. Kommt zu der statischen Vorlast zusätzlich noch die dynamische Belastung während der bestimmungsgemäßen Verwendung des Hydrolagers hinzu, sind die mechanischen Belastungen auf die Membranen häufig so groß, dass das Hydrolager insgesamt nur noch eine unerwünscht niedrige Gebrauchsdauer aufweist. Eine Beschädigung/Zerstörung der Membranen kann zu einem vorzeitigen Ausfall des Hydrolagers führen.

Aus US 4,936,556 A geht eine Hydrobuchse hervor, die aus drei miteinander verbundenen Elastomerteilen gebildet ist. Bei der Montage der Hydrobuchse wird ein Elastomerkörper eines Elastomerteiles in Scherrichtung verformt. Während der bestimmungsgemäßen Verwendung der Hydrobuchse als Fahrerhauslager wird die Hydrobuchse mit einer statischen Vorlast beaufschlagt, so dass der in Scherrichtung verformte Elastomerkörper wieder in seine herstellungsbedingte Form überführt wird.

In JP 2008 248 898 A ist eine Hydrolageranordnung offenbart, die ein erstes Elastomerlager und ein zweites Elastomerlager in Form einer Hydrobuchse aufweist. Das erste Elastomerlager wird während der bestimmungsgemäßen Verwendung der Hydrolageranordnung mit einer statische Vorlast beaufschlagt, so dass sich ein zwischen den beiden Elastomerlagern ausgebildeter Axialspalt schließt.

Ferner geht aus EP 0 452 169 A1 ein als Hydrobuchse ausgebildetes Hydrolager hervor, das einen mehrteiligen Innenkern, eine Außenhülse und mehrere zwischen dem mehrteiligen Innenkern und der Außenhülse angeordnete Elastomerkörper, die über Fluidkanäle miteinander verbundene Fluidkammern begrenzen, aufweist.

In EP 1 160 483 A2 ist ein als Motor- oder Getriebelager ausgebildetes Hydrolager offenbart. Das Hydrolager umfasst ein Traglager, das sich über eine Tragfeder auf einem Auflager abstützt und dabei einen Arbeitsraum und einen Ausgleichsraum begrenzt, die mit Dämpfungsflüssigkeit gefüllt sind. Der Arbeitsraum und der Ausgleichsraum sind über eine Trennwand voneinander getrennt und über einen in die Trennwand eingebrachten Dämpfungskanal flüssigkeitsleitend miteinander verbunden.

Des Weiteren ist in EP 1 359 342 A1 ein Hydrolager mit einem topfförmigen Gehäuse offenbart, das durch einen Elastomerkörper und einen Lagerkern verschlossen ist. Zwischen dem Elastomerkörper und dem Lagerkern ist eine Gleithülse angeordnet, so dass der Lagerkern relativ verschiebbar zu dem Elastomerkörper und der Außenhülse ist. Der Lagerkern stützt sich zudem über eine Spiralfeder am Boden des Gehäuses ab.

Des Weiteren geht aus DE 198 33 537 A1 ein Fahrwerkslager hervor, das einen Axialbund, einen Radialgrundkörper und einen Radialanschlag aufweist, die miteinander verbunden sind, wobei der Radialgrundkörper frei von einer festhaftenden Verbindung zum Axialbund ausgeführt ist.

### Darstellung der Erfindung

Der Erfindung liegt die Aufgabe zugrunde, eine Hydrolageranordnung derart weiterzuentwickeln, dass das Hydrolager, das einen Bestandteil der Hydrolageranordnung bildet, eine längere Gebrauchsdauer auch dann aufweist, wenn das Hydrolager während seiner bestimmungsgemäßen Verwendung einer statischen Vorlast ausgesetzt ist.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist eine Hydrolageranordnung vorgesehen, umfassend ein Hydrolager und ein Vorlastausgleichselement für das Hydrolager, wobei das Hydrolager durch eine Hydrobuchse gebildet ist, umfassend einen Hydrolagerkern, der mit radialem Abstand von einem Hydrolagergehäuse umschlossen ist, wobei in dem durch den Abstand gebildeten Spalt Membranen aus gummielastischem Werkstoff angeordnet sind, die Fluidkammern begrenzen, wobei das Hydrolager eine Arbeitsrichtung aufweist und während seiner bestimmungsgemäßen Verwendung durch eine erste Kraft einer statischen Vorlast belastbar ist und wobei das Vorlastausgleichselement während seiner bestimmungsgemäßen Verwendung eine entgegen der ersten Kraft der statischen Vorlast wirkende zweite Kraft aufweist, wobei die gegeneinander wirkenden ersten und zweiten Kräfte im Wesentlichen gleich groß sind, wobei das Vorlastausgleichselement durch eine Zusatzfeder gebildet ist, wobei die Zusatzfeder durch eine Keilfeder mit einem Keillagerkern gebildet ist und wobei der Keillagerkern und der Hydrolagerkern kraftschlüssig verbunden sind.

Durch eine solche Anordnung wird erreicht, dass die statische Vorlast auf das Hydrolager von der dynamischen Beanspruchung des Hydrolagers zumindest weitestgehend entkoppelt ist.

Durch die Zusammenfassung eines Hydrolagers und eines Vorlastausgleichselements zu der erfindungsgemäßen Hydrolageranordnung wird erreicht, dass die Hydrolageranordnung im herstellungsbedingten, das heißt nicht verbauten Zustand derart vorgespannt ist, dass das Hydrolager später während der bestimmungsgemäßen Verwendung, also im verbauten Zustand, unter dem Einfluss der statischen Vorlast eine wesentlich geringere Deformation der gummielastischen Membranen des Hydrolagers ertragen muss.

Idealerweise ist das Vorlastausgleichselement derart ausgelegt, dass während der bestimmungsgemäßen Verwendung der Hydrolageranordnung unter der Einwirkung der statischen Vorlast die gummielastischen Membranen des Hydrolagers genau die Geometrie aufweisen, die sie im herstellungsbedingten unbelasteten Zustand nach ihrer Vulkanisation aufweisen.
Während der bestimmungsgemäßen Verwendung der Hydrolageranordnung wird durch das Vorlastausgleichselement die statische Vorlast auf das Hydrolager ausgeglichen. Nur noch die dynamische Beanspruchung wirkt auf das Hydrolager. Insgesamt weist das Hydrolager der Hydrolageranordnung deshalb gleichbleibend gute Gebrauchseigenschaften während einer langen Gebrauchsdauer auf.

Das Hydrolager ist durch eine Hydrobuchse gebildet, umfassend einen Hydrolagerkern, der mit radialem Abstand von einem Hydrolagergehäuse umschlossen ist, wobei in dem durch den Abstand gebildeten Spalt Membranen aus gummielastischem Werkstoff angeordnet sind, die Fluidkammern begrenzen.

Solche Hydrobuchsen sind allgemein bekannt und gelangen z. B. im Bereich des Fahrwerks von Kraftfahrzeugen zur Anwendung. Die in den Fluidkammern enthaltene Dämpfungsflüssigkeit wird während der bestimmungsgemäßen Verwendung der Hydrobuchsen z. B. durch Dämpfungskanäle zwischen den Fluidkammern hin und her gefördert. Die Arbeitsrichtung einer solchen Hydrobuchse ist zumeist radial. Der Hydrolagerkern wird dabei in radialer Richtung, bezogen auf das Hydrolagergehäuse, aus seiner herstellungsbedingten Lage ausgelenkt. Bei einer solchen Auslenkung wird das Volumen einer Fluidkammer verkleinert, das Volumen einer anderen Fluidkammer in gleichem Maße vergrößert, wobei das aus der verkleinerten Fluidkammer verdrängte Volumen z. B. durch einen Dämpfungskanal hindurch in die Fluidkammer mit vergrößertem Volumen gefördert wird. Dadurch erfolgt eine Dämpfung der in das Hydrolager eingeleiteten Schwingungen.
Generell kann die statische Vorlast in axialer oder radialer Richtung auf das Hydrolager wirken. Wirkt die statische Vorlast in axialer Richtung, würden sich ohne Vorlastausgleichselement der Hydrolagerkern und das Hydrolagergehäuse in axialer Richtung relativ zueinander verlagern und die Membranen aus gummielastischem Werkstoff wären unerwünschten, die Gebrauchsdauer verringernden mechanischen Belastungen ausgesetzt.
Auch dann, wenn die statische Vorlast in radialer Richtung auf das Hydrolager wirkt, wenn also der Hydrolagerkern im Hydrolagergehäuse durch die statische Vorlast in radialer Richtung verlagert wird, würden die Membranen ohne das Vorlastausgleichselement im Hydrolager gestaucht oder einer Zugbelastung ausgesetzt. Besonders Zugbelastungen vertragen gummielastische Werkstoffe nur schlecht.

Mit dem Vorlastausgleichselement in der Hydrolageranordnung können solch unerwünschte Deformationen der Membranen demgegenüber verhindert werden. Obwohl eine statische Vorlast auf das Hydrolager wirkt, wird durch das Vorlastausgleichselement erreicht, dass sich die Geometrie des Hydrolagers unter Vorlasteinfluss praktisch nicht von der herstellungsbedingten Geometrie des Hydrolagers im nicht verbauten Zustand unterscheidet.
Das Hydrolager und das Vorlastausgleichselement sind bevorzugt axial zueinander benachbart angeordnet.
Eine solche Anordnung ist dann von Vorteil, wenn die statische Vorlast ebenfalls in axialer Richtung auf das Hydrolager wirkt.

Wirkt demgegenüber die statische Vorlast in radialer Richtung auf das Hydrolager, wirkt das Vorlastausgleichselement dieser radial wirksamen statischen Vorlast auch in radialer Richtung entgegen.
Das Vorlastausgleichselement ist durch eine Zusatzfeder gebildet.
In Abhängigkeit vom jeweiligen Anwendungsfall kann die Zusatzfeder als Schraubenfeder ausgebildet sein und aus einem metallischen Werkstoff bestehen, oder die Zusatzfeder kann aus einem gummielastischen Werkstoff bestehen.

Eine Zusatzfeder, die als Schraubenfeder ausgebildet ist und aus einem metallischen Werkstoff besteht, gelangt bevorzugt dann zur Anwendung, wenn in axialer Richtung eine möglichst geringe Dämpfung erzielt werden soll.

Eine Zusatzfeder aus einem gummielastischen Werkstoff gelangt demgegenüber dann zur Anwendung, wenn Schwingungen auch in axialer Richtung durch die intrinsische Dämpfung des Elastomerwerkstoffs bedämpft werden sollen. Dieses ist insbesondere bei Hilfsrahmenlagern in Kraftfahrzeugen in der Regel der Fall.
Die Zusatzfeder aus einem gummielastischen Werkstoff kann dabei bevorzugt als Keilfeder mit einem Keillagerkern gebildet sein. Eine solche Ausgestaltung der Zusatzfeder ist insbesondere dann von Vorteil, wenn die beanspruchte Hydrolageranordnung als Hinterachsträgerlager in Kraftfahrzeugen Verwendung findet. Zusätzlich zu der dynamischen Beanspruchung während der bestimmungsgemäßen Verwendung der Hydrolageranordnung wirkt auf das Hydrolager eine statische Vorlast. Ohne das Vorlastausgleichselement würde bei einer typischen axialen Steifigkeit von 400 N/mm im Arbeitspunkt die statische Vorlast, die z. B. 4 kN beträgt, bei einer solchen Anwendung z. B. zu einer statischen axialen Auslenkung des Hydrolagers von mehr als 10 mm führen. Würde das Hydrolager dann außerdem dynamisch beansprucht, würden die gummielastischen Membranen des Hydrolagers derart hohen mechanischen Beanspruchungen ausgesetzt, dass sie in relativ kurzer Zeit zerstört, zumindest jedoch beschädigt würden. Die Vermeidung solch unerwünscht hoher mechanischer Belastungen der gummielastischen Membranen des Hydrolagers ist Aufgabe des Vorlastausgleichselements.

Der Keillagerkern kann herstellungsbedingt ortsfest im Hydrolagerkern angeordnet sein. Eine solch ortsfeste Anordnung kann dadurch erreicht werden, dass der Keillagerkern und der Hydrolagerkern kraftschlüssig, z. B. durch eine Presspassung, miteinander verbunden sind.
Die Montage einer solchen Hydrolageranordnung erfolgt dadurch, dass der Keillagerkern in den Hydrolagerkern in axialer Richtung eingepresst wird. Der Keillagerkern und der Hydrolagerkern sind koaxial zueinander angeordnet, wobei der Hydrolagerkern den Keillagerkern konzentrisch umschließt. Während des Fügevorgangs wird der Keillagerkern zunächst so lang in axialer Richtung in den Hydrolagerkern eingeführt, bis die Keilfeder gerade noch ihre herstellungsbedingte, mechanisch unbelastete Form hat. Der Außenumfang der Keilfeder berührt dabei das Hydrolagergehäuse des Hydrolagers, während der Keillagerkern und der Hydrolagerkern noch nicht vollständig ineinander gefügt sind.

Anschließend werden Keillagerkern und der Hydrolagerkern fertig ineinander gefügt und zwar z. B. derart, dass die der Keilfeder axial abgewandte Stirnseite des Hydrolagerkerns mit der entsprechenden Stirnseite des Keillagerkerns in eine Radialebene, also bündig zueinander, angeordnet sind. Anschließend sind die gummielastischen Teile der Keilfeder und des Hydrolagers - im nichtverbauten Zustand der Hydrolageranordnung - vorgespannt, weil die Keilfeder dafür sorgt, dass auch die gummielastischen Teile des Hydrolagers entgegen der während der bestimmungsgemäßen Verwendung der Hydrolageranordnung aufzubringenden statischen Vorlast vorgespannt sind.

Im verbauten Zustand der Hydrolageranordnung, wenn also auf die Hydrolageranordnung die statische Vorlast wirkt, entspricht die Geometrie der gummielastischen Teile von Keilfeder und Hydrolager im Wesentlichen der Geometrie der jeweiligen Bauteile in ihrer jeweils herstellungsbedingten Form nach deren Vulkanisation. Die statische Vorlast ist dadurch von der dynamischen Beanspruchung des Hydrolagers weitestgehend entkoppelt.

Die Arbeitsrichtung des Hydrolagers und die Richtung der ersten Kraft der statischen Vorlast können gleich oder senkrecht zueinander sein, abhängig von der jeweiligen Verwendung der Hydrolageranordnung.

Wie zuvor bereits beschrieben, ist die Verwendung der erfindungsgemäßen Hydrolageranordnung als Hinterachsträgerlager in Kraftfahrzeugen besonders vorteilhaft, weil das Hydrolager in einem solchen Fall häufig einer hohen statischen Vorlast ausgesetzt ist, die durch das Vorlastausgleichselement ausgeglichen wird.

### Kurzbeschreibung der Zeichnung

Die Hydrolageranordnung wird nachfolgend anhand der Figuren 1 bis 13 näher beschrieben.

Die Fig. 1 bis 13 zeigen, jeweils in schematischer Darstellung:
- Fig. 1 bis 3: ein Hydrolager, das als Hydrobuchse ausgebildet und Stand der Technik ist, wobei in
Fig. 1 die Hydrobuchse ohne statische Vorlast gezeigt ist, in
Fig. 2 mit einer statischen Vorlast, deren erste Kraft in axialer Richtung wirkt und in
Fig. 3 mit einer statischen Vorlast, deren erste Kraft in radialer Richtung wirkt.
- Fig. 4 bis 6: ein erstes Ausführungsbeispiel einer nicht erfindungsgemäßen Hydrolageranordnung, wobei das Hydrolager als Hydrobuchse ausgebildet ist und wobei das Vorlastausgleichselement durch eine Zusatzfeder gebildet ist, die als Schraubenfeder ausgeführt ist, wobei in

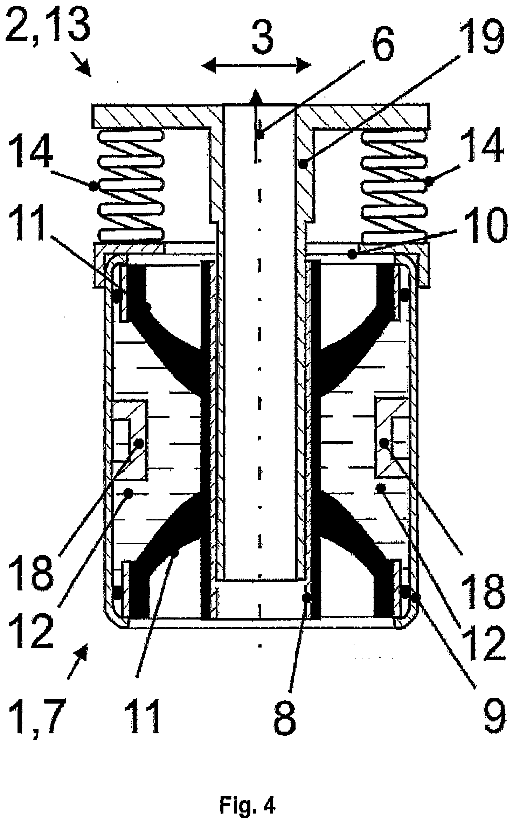

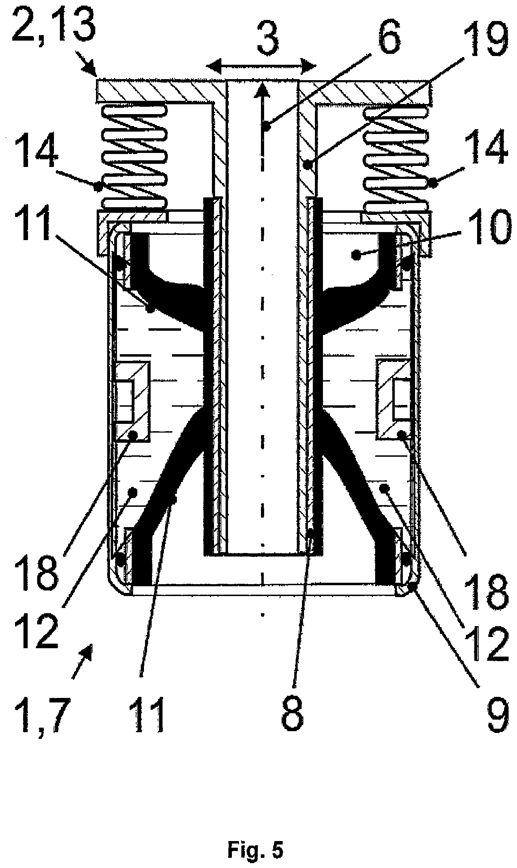

Fig. 4 die Hydrolageranordnung während ihrer Montage dargestellt ist und sowohl die Hydrobuchse als auch das Vorlastausgleichselement in ihrer herstellungsbedingten Form ohne Beaufschlagung mit einer Vorspannung gezeigt sind, Fig. 5 die fertig montierte Hydrolageranordnung in ihrer herstellungsbedingten Form im noch nicht verbauten Zustand gezeigt ist,

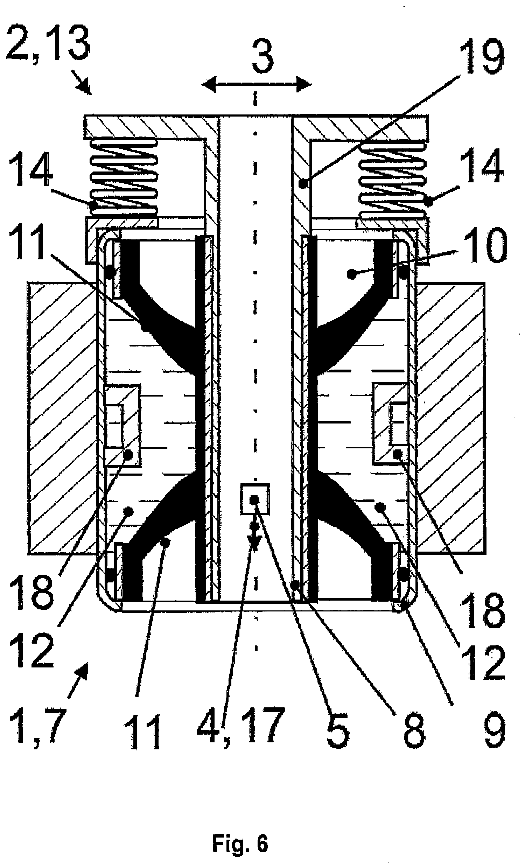

Fig. 6 die Hydrolageranordnung aus Fig. 5 im verbauten Zustand, beaufschlagt mit einer statischen Vorlast gezeigt ist.

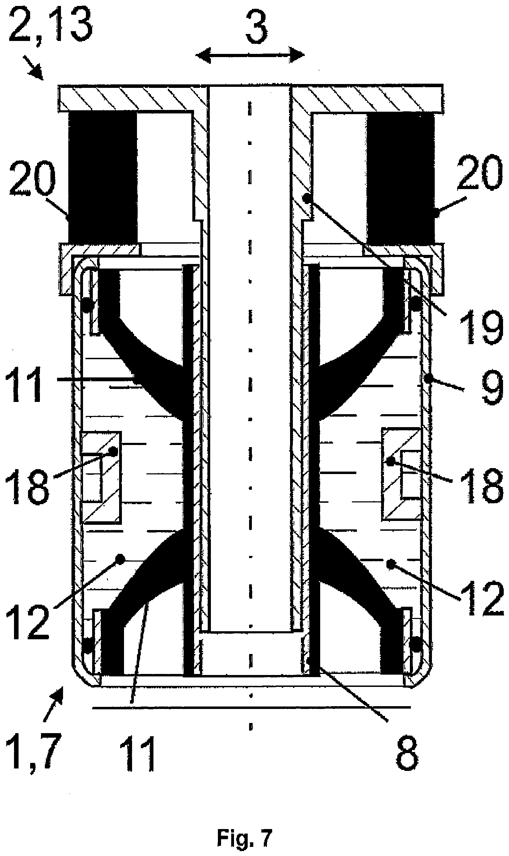

- Fig. 7 bis 9: ein zweites Ausführungsbeispiel einer nicht erfindungsgemäßen Hydrolageranordnung, ähnlich dem ersten Ausführungsbeispiel gemäß Fig. 4 bis 6, wobei das Vorlastausgleichselement in den Fig. 7 bis 9 durch eine Zusatzfeder aus gummielastischem Werkstoff gebildet ist, wobei in.
Fig. 7 die Hydrolageranordnung während ihrer Montage dargestellt ist und sowohl die Hydrobuchse als auch das Vorlastausgleichselement in ihrer herstellungsbedingten Form ohne Beaufschlagung mit einer Vorspannung gezeigt sind,

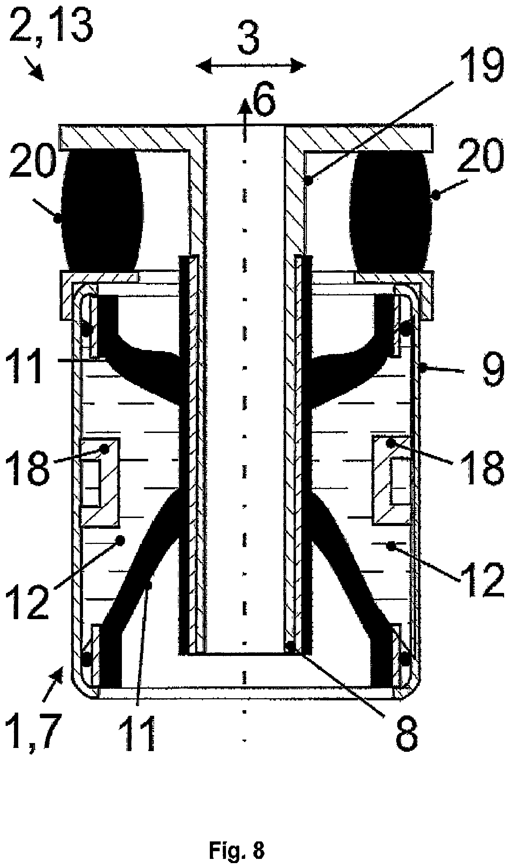

Fig. 8 die fertig montierte Hydrolageranordnung in ihrer herstellungsbedingten Form im noch nicht verbauten Zustand gezeigt ist,

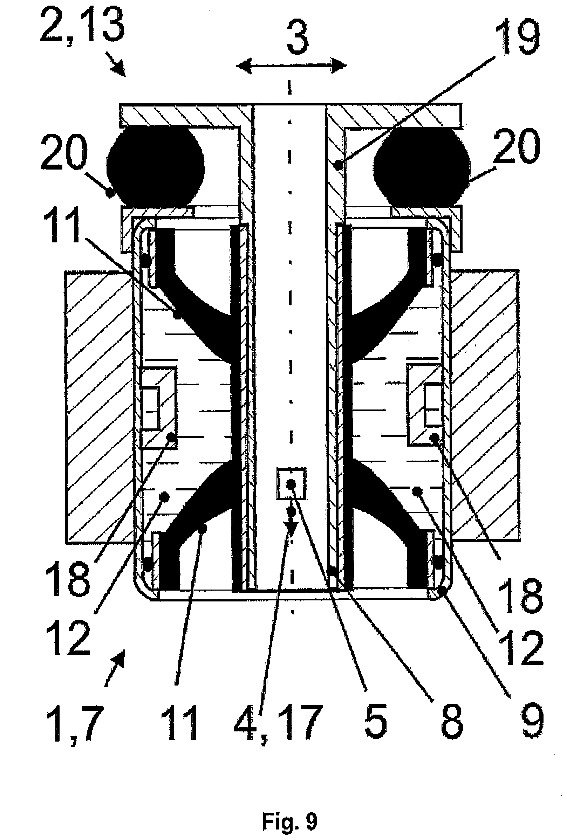

Fig. 9 die Hydrolageranordnung aus Fig. 8 im verbauten Zustand, beaufschlagt mit einer statischen Vorlast gezeigt ist.

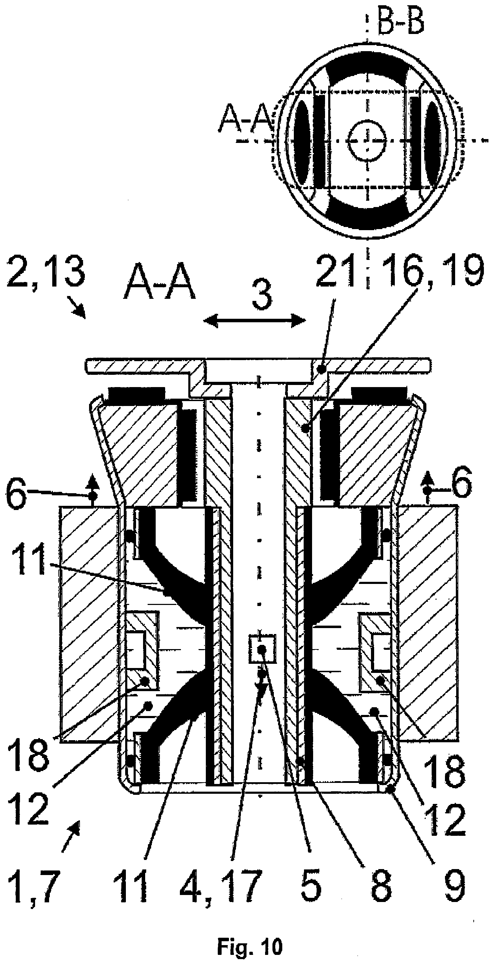

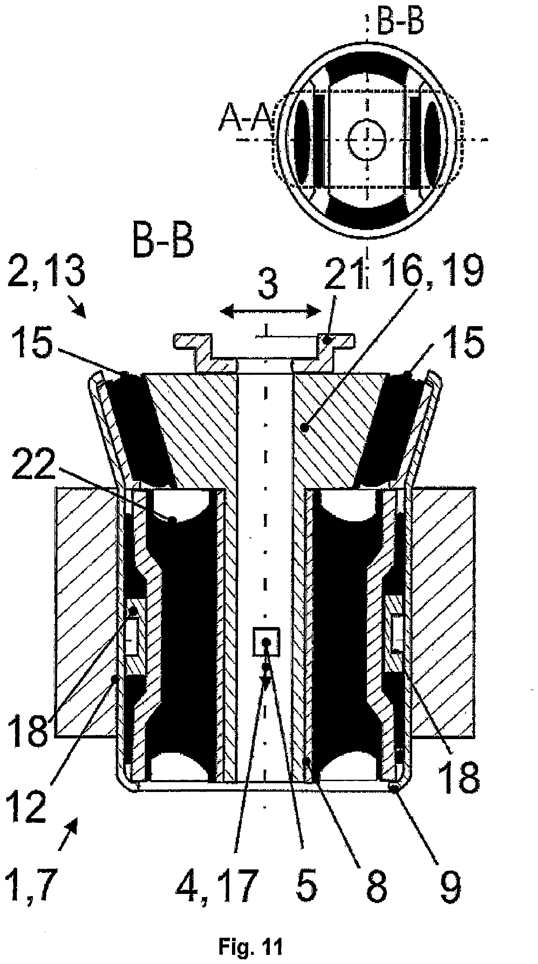

- Fig. 10 und 11: ein Ausführungsbeispiel einer erfindungsgemäßen Hydrolageranordnung, bei der das Hydrolager ebenfalls, wie bei den vorherigen Beispielen, als Hydrobuchse ausgebildet ist, wobei das Vorlastausgleichselement in Form der Zusatzfeder jedoch durch eine Keilfeder mit einem Keillagerkern gebildet ist, der ortsfest im Hydrolagerkern der Hydrobuchse angeordnet ist.

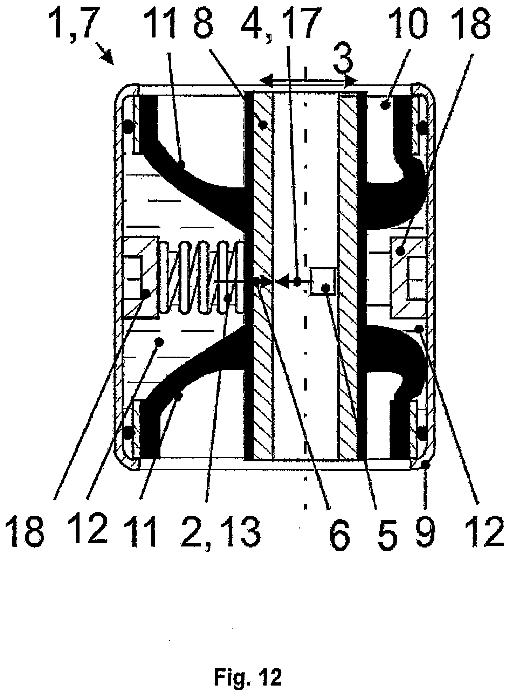

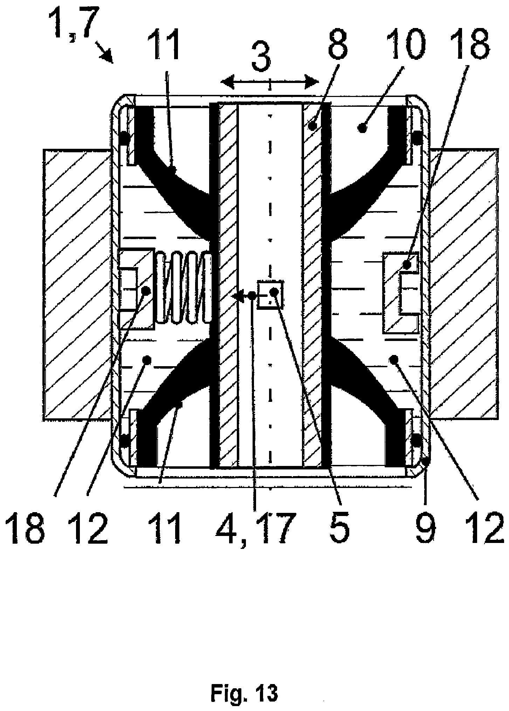

- Fig. 12 und 13: ein weiteres Ausführungsbeispiel einer nicht erfindungsgemäßen Hydrolageranordnung, bei dem die erste Kraft der statischen Vorlast und die zweite Kraft des Vorlastausgleichselements in radialer Richtung wirksam sind.

### Ausführung der Erfindung

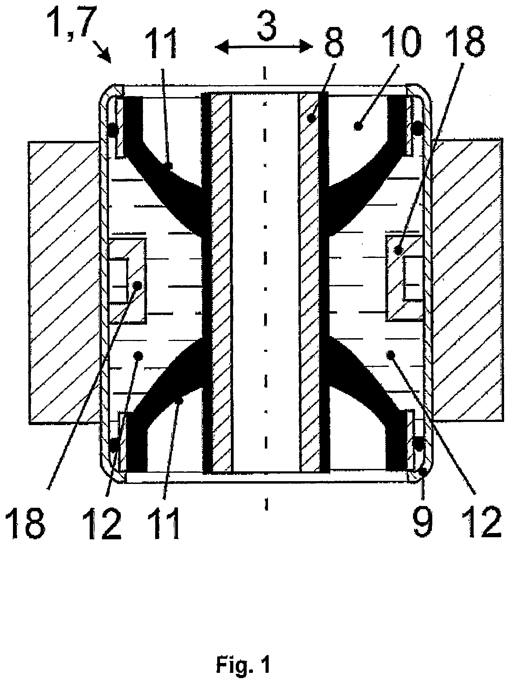

In den Fig. 1 bis 13 ist das Hydrolager 1 jeweils als Hydrobuchse 7 ausgebildet. In Fig. 1 sind die Membranen 11 der Hydrobuchse 7 im herstellungsbedingten Zustand der Hydrobuchse 7, also ohne Vorlast, gezeigt. Die Arbeitsrichtung 3 ist radial; während der bestimmungsgemäßen Verwendung der Hydrobuchse 7 verlagern sich der Hydrolagerkern 8 und das Hydrolagergehäuse 9 in Arbeitsrichtung 3 radial relativ zueinander.

Ist die Hydrobuchse 7, wie hier gezeigt, vorlastfrei, sind die Membranen 11 nicht deformiert und dadurch auch keinen unerwünscht hohen mechanischen Belastungen ausgesetzt.

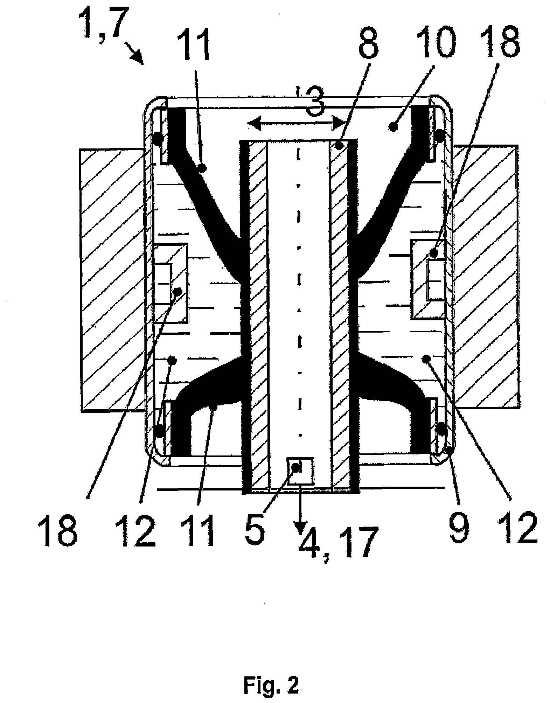

In Fig. 2 ist die Hydrobuchse 7 aus Fig. 1 im verbauten Zustand mit einer statischen Vorlast 5 gezeigt, die mit einer sich in axialer Richtung erstreckenden ersten Kraft 4 auf die Hydrobuchse 7 wirkt. Die Arbeitsrichtung 3 ist, ebenso wie in Fig. 1, radial.
Durch die statische Vorlast 5 werden die Membranen 11 der Hydrobuchse 7 unerwünscht stark gedehnt oder gestaucht, wobei beides zu einer erheblich reduzierten Gebrauchsdauer der Hydrobuchse 7 und einem vorzeitigen Ausfall führen kann.

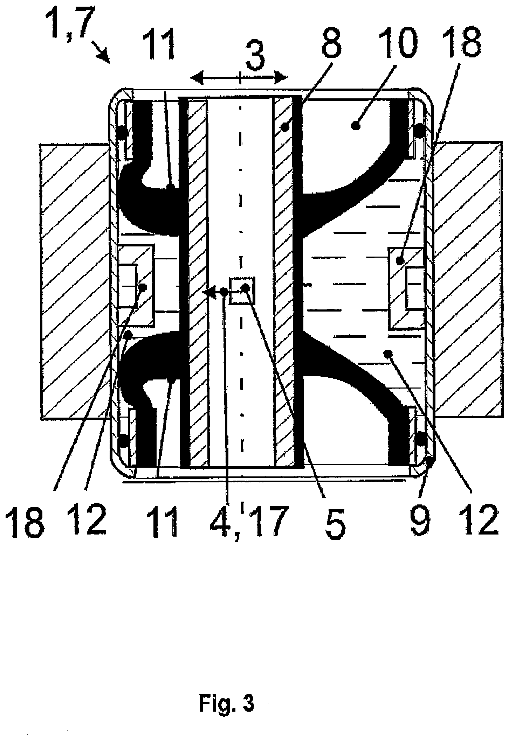

In Fig. 3 wirkt die statische Vorlast 5 mit ihrer ersten Kraft 4 in radialer Richtung, also in Arbeitsrichtung 3 der Hydrobuchse 7 und führt zu einer asymmetrischen Auslenkung des Hydrolagerkerns 8 in radialer Richtung relativ zum Hydrolagergehäuse 9. Durch diese asymmetrische Auslenkung werden die Membranen 11, ebenso, wie zuvor zu Fig. 2 beschrieben, unerwünscht stark gedehnt oder gestaucht, was auch in diesem Fall zu einer raschen Beschädigung/Zerstörung der Membranen 11 während der bestimmungsgemäßen Verwendung der Hydrobuchse führen kann.

Hydrobuchsen 7 sind allgemein bekannt und umfassen, wie auch in den Figuren 1 bis 3 gezeigt, Fluidkammern 12, die mit Dämpfungsflüssigkeit gefüllt sind. Zur Dämpfung von in das Hydrolager eingeleiteten Schwingungen wird die Dämpfungsflüssigkeit zwischen den Fluidkammern 12 zum Beispiel durch einen Dämpfungskanal 18 hin und her verlagert. Dadurch wird Energie in Wärme umgesetzt, und die eingeleiteten Schwingungen werden gedämpft.

Beispiele nicht erfindungsgemäßer Hydrolageranordnung sind in den Fig. 4 bis 9, 12 und 13 und ein Beispiel einer erfindungsgemäßen Hydrolageranordnung ist in den Fig. 10 und 11 dargestellt.

Die erfindungsgemäße und nicht erfindungsgemäße Hydrolageranordnungen umfassen dabei ein Hydrolager 1 in Form einer Hydrobuchse 7 und ein Vorlastausgleichselement 2 für die Hydrobuchse 7, wobei die Hydrobuchse 7 eine Arbeitsrichtung 3 aufweist und während ihrer bestimmungsgemäßen Verwendung durch die erste Kraft 4 der statischen Vorlast 5 belastbar ist. Das Vorlastausgleichselement 2 weist während seiner bestimmungsgemäßen Verwendung eine entgegen der ersten Kraft 4 der statischen Vorlast 5 wirkende zweite Kraft 6 auf. Die ersten 4 und zweiten Kräfte 6 wirken gegeneinander, sind im Wesentlichen gleich groß und heben sich deshalb praktisch auf. Das erste nicht erfindungsgemäße Ausführungsbeispiel ist in den Fig. 4 bis 6 gezeigt.

In Fig. 4 ist die Hydrolageranordnung während ihrer Montage gezeigt. Sowohl die Hydrobuchse 7 als auch das Vorlastausgleichselement 2 in Form einer Zusatzfeder 13, die als Schraubenfeder 14 ausgebildet ist, sind jeweils im herstellungsbedingten Zustand, also jeweils ohne Vorspannung, gezeigt. Der Kern 19 der Zusatzfeder 13 ist bereits teilweise in den Hydrolagerkern 8 der Hydrobuchse 7 eingeführt. Sowohl die Membranen 11 als auch die Schraubenfedern 14 sind jeweils unbelastet.

In Fig. 5 ist die Hydrolageranordnung aus Fig. 4 in ihrer herstellungsbedingten Form gezeigt. Der Kern 19 der Zusatzfeder 13 ist nun vollständig in den Hydrolagerkern 8 der Hydrobuchse 7 eingeführt. Der Hydrolagerkern 8 wird durch die in axialer Richtung wirkende zweite Kraft 6 der Zusatzfeder 13 in axialer Richtung relativ zum Hydrolagergehäuse 9 verlagert. Dadurch ist die Hydrobuchse 7 so weit vorgespannt, dass sie später im verbauten Zustand, der in Fig. 6 dargestellt ist, durch Einwirkung der statischen Vorlast 5 wieder in ihre Ursprungslage zurückgedrückt wird und eine Form einnimmt, wie in Fig. 4 gezeigt.

In Fig. 6 ist die Hydrolageranordnung während ihrer bestimmungsgemäßen Verwendung, also im verbauten Zustand, unter Einfluss der statischen Vorlast 5 gezeigt. Die dargestellte Einbausituation zeigt die Hydrolageranordnung in einem PKW-Hinterachsträger eines Kraftfahrzeugs.
Wie in der Darstellung zu erkennen ist, ist die Zusatzfeder 13, bezogen auf Fig. 5, durch die Aufbringung der statischen Vorlast 5 noch weiter vorgespannt, die Membranen 11 sind jedoch wieder vorspannungsfrei, genau wie im herstellungsbedingten Zustand der Hydrobuchse 7, der in Fig. 4 gezeigt ist. Entscheidend ist, dass die Membranen 11 der Hydrobuchse 7 im verbauten Zustand der Hydrolageranordnung von der statischen Vorlast 5 entkoppelt sind.

Die Zusatzfeder 13 kann z. B. durch mehrere gleichmäßig in Umfangsrichtung verteilte Schraubenfedern 14 gebildet sein oder durch eine Schraubenfeder 14, die sich um den Kern 19 der Zusatzfeder 13 herum erstreckt.

In den Fig. 7 bis 9 ist ein zweites Ausführungsbeispiel einer nicht erfindungsgemäßen Hydrolageranordnung gezeigt, das sich vom ersten Ausführungsbeispiel der Hydrolageranordnung gemäß Fig. 4 bis 6 nur dadurch unterscheidet, dass die Zusatzfeder 13, die das Vorlastausgleichselement 2 bildet, aus einem gummielastischen Werkstoff besteht. Anstelle der Schraubenfedern 14, die im ersten Ausführungsbeispiel zur Anwendung gelangen, gelangen hier Elastomerfedern 20 zur Anwendung, wobei z. B. mehrere gleichmäßig in Umfangsrichtung verteilte Elastomerfedern 20 zur Anwendung gelangen können. Generell besteht auch die Möglichkeit, dass die Zusatzfeder 13 durch eine kreisringförmig ausgebildete Elastomerfeder 20 gebildet ist. Durch die Vorspannung im herstellungsbedingten Zustand der Hydrolageranordnung gemäß Fig. 8 werden die Membranen 11 gedehnt oder gestaucht, wobei diese Dehnung oder Stauchung im verbauten Zustand der Hydrolageranordnung gemäß Fig. 9, wenn also die statische Vorlast 5 auf die Hydrolageranordnung wirkt, praktisch wieder ausgeglichen ist.

In den Fig. 10 und 11 ist ein erfindungsgemäßes Ausführungsbeispiel gezeigt. Die Zusatzfeder 13 ist in diesem Ausführungsbeispiel durch eine Keilfeder 15 gebildet und umfasst außerdem einen Lagerkern 16. Der Lagerkern 16 ist, wie die Kerne 19 aus den vorherigen Ausführungsbeispielen, ortsfest im Hydrolagerkern 8 angeordnet, z. B. durch eine kraftschlüssige Presspassung.

Die Hydrolageranordnung ist in den Fig. 10 und 11 im verbauten Zustand, belastet mit der statischen Vorlast 5 gezeigt. Die Darstellung entspricht im Wesentlichen den Figuren 6 und 9.

21 bezeichnet einen Axialanschlag, 22 ein Tragpolster aus gummielastischem Werkstoff.

In Fig. 10 ist der Schnitt A-A gezeigt.

In Fig. 11 ist der Schnitt B-B gezeigt.

In den Figuren 10 und 11 ist außerdem jeweils ein Schnitt durch die Hydrolageranordnung gezeigt.

Durch das Einpressen des Keillagerkerns 16 in den Hydrolagerkern 8 werden sowohl die Keilfeder 15 als auch die Hydrobuchse 7 in der Art vorgespannt, dass die Hydrolagerbuchse 7 unter statischer Vorlast 5 wieder ihre Ausgangsgeometrie einnimmt.

Dadurch werden unerwünscht hohe Belastungen der Membranen 11 der Hydrobuchse 7 während der bestimmungsgemäßen Verwendung im verbauten Zustand der Hydrolageranordnung verhindert und gleichbleibend gute Gebrauchseigenschaften während einer langen Gebrauchsdauer erreicht.

In den Fig. 12 und 13 ist ein drittes nicht erfindungsgemäßes Ausführungsbeispiel der Hydrolageranordnung gezeigt, das sich von den beiden zuvor beschriebenen Ausführungsbeispielen dadurch unterscheidet, dass die statische Vorlast 5 nicht in axialer Richtung auf die Hydrolageranordnung wirkt, sondern in radialer Richtung, das heißt in Arbeitsrichtung 3.

Fig. 12 zeigt die Hydrolageranordnung in ihrem herstellungsbedingten Zustand, jedoch noch nicht verbaut. Die Zusatzfeder 13, die, wie hier dargestellt, als Schraubenfeder oder auch als Elastomerfeder ausgebildet sein kann, wirkt mit der zweiten Kraft 6 zwischen dem Hydrolagerkern 8 und dem Hydrolagergehäuse 9 und bewirkt dadurch eine relative radiale Auslenkung des Hydrolagerkerns 8 zum Hydrolagergehäuse 9.

Fig. 13 zeigt die Hydrolageranordnung aus Fig. 12 im verbauten Zustand, wobei in diesem verbauten Zustand die statische Vorlast 5 mit der ersten Kraft 4 auf die Hydrolageranordnung wirkt. Dadurch, dass die erste Kraft 4 und die zweite Kraft 6 im Wesentlichen dieselbe Größe, jedoch eine entgegengesetzte Richtung haben, wird die statische Vorlast 5 derart ausgeglichen, dass die Hydrobuchse 7 wieder ihre herstellungsbedingte nicht-belastete Form einnimmt und während der bestimmungsgemäßen Verwendung der Hydrolageranordnung nur noch den dynamischen Beanspruchungen ausgesetzt ist.

## Patentansprüche

1. Hydrolageranordnung, umfassend ein Hydrolager (1) und ein Vorlastausgleichselement (2) für das Hydrolager (1), wobei das Hydrolager (1) durch eine Hydrobuchse (7) gebildet ist, umfassend einen Hydrolagerkern (8), der mit radialem Abstand von einem Hydrolagergehäuse (9) umschlossen ist, wobei in dem durch den Abstand gebildeten Spalt (10) Membranen (11) aus gummielastischem Werkstoff angeordnet sind, die Fluidkammern (12) begrenzen, wobei das Hydrolager (1) eine Arbeitsrichtung (3) aufweist und während seiner bestimmungsgemäßen Verwendung durch eine erste Kraft (4) einer statischen Vorlast (5) belastbar ist, wobei das Vorlastausgleichselement (2) während seiner bestimmungsgemäßen Verwendung eine entgegen der ersten Kraft (4) der statischen Vorlast (5) wirkende zweite Kraft (6) aufweist, wobei die gegeneinander wirkenden ersten (4) und zweiten Kräfte (6) im Wesentlichen gleich groß sind und wobei das Vorlastausgleichselement (2) durch eine Zusatzfeder (13) gebildet ist, **dadurch gekennzeichnet, dass** die Zusatzfeder (13) durch eine Keilfeder (15) mit einem Keillagerkern (16) gebildet ist und dass der Keillagerkern (16) und der Hydrolagerkern (8) kraftschlüssig verbunden sind.

2. Hydrolageranordnung nach Anspruch 1, **dadurch gekennzeichnet, dass** das Hydrolager (1) und das Vorlastausgleichselement (2) axial zueinander benachbart angeordnet sind.

3. Hydrolageranordnung nach einem der Ansprüche 1 oder 2, **dadurch gekennzeichnet, dass** die Zusatzfeder (13) aus einem gummielastischen Werkstoff besteht.

4. Hydrolageranordnung nach einem der Ansprüche 1 bis 3 **dadurch gekennzeichnet, dass** der Keillagerkern (16) herstellungsbedingt ortsfest im Hydrolagerkern (8) angeordnet ist.

5. Hydrolageranordnung nach einem der Ansprüche 1 bis 4, **dadurch gekennzeichnet, dass** die Arbeitsrichtung (3) des Hydrolagers (1) und die Richtung (17) der ersten Kraft (4) der statischen Vorlast (5) gleich oder senkrecht zueinander sind.

6. Verwendung einer Hydrolageranordnung nach einem der Ansprüche 1 bis 5 als Hinterachsträgerlager in Kraftfahrzeugen.

## Claims

1. A hydraulic mount assembly comprising a hydraulic mount (1) and a preload compensation member (2) for the hydraulic mount (1), wherein the hydraulic mount (1) is formed of a hydraulic bushing (7) comprising a hydraulic mount core (8) that is enclosed by a hydraulic mount housing (9) with a radial space therebetween, wherein diaphragms (11) made of rubber elastic material are disposed in the gap (10) formed of the space, which delimit fluid chambers (12), wherein the hydraulic mount (1) comprises a working direction (3) and can be loaded with a first force (4) of a static preload (5) during its proper use, wherein the preload compensation member (2) comprises a second force (6) counteracting the first force (4) of the static preload (5) during its proper use, wherein the first (4) and second forces (6) counteracting each other are essentially equal to one another and wherein the preload compensation member (2) is formed of an auxiliary spring (13), **characterized in that** the auxiliary spring (13) is formed of a wedged spring (15) with a wedged spring core (16) and that the wedged spring core (16) and the hydraulic mount core (8) are connected in a force-fitting manner.

2. The hydraulic mount assembly according to claim 1, **characterized in that** the hydraulic mount (1) and the preload compensation member (2) are axially disposed adjacent to one another.

3. The hydraulic mount assembly according to claim 1 or 2, **characterized in that** the auxiliary spring (13) is made of a of rubber elastic material.

4. The hydraulic mount assembly according to any of claims 1 to 3, **characterized in that** the wedged spring core (16) is fixedly disposed in the hydraulic mount core (8) conditional of manufacturing.

5. The hydraulic mount assembly according to any of claims 1 to 4, **characterized in that** the working direction (3) of the hydraulic mount (1) and the direction (17) of the first force (4) of the static preload (5) are equal or perpendicular to one another.

6. The use of the hydraulic mount assembly according to any of claims 1 to 5 as a rear axle support mount in motor vehicles.

## Revendications

1. Agencement de support hydraulique, incluant un support hydraulique (1) et un élément de compensation de précharge (2) pour le support hydraulique (1), dans lequel le support hydraulique (1) est formé par une douille hydraulique (7) qui inclut un noyau de support hydraulique (8) qui est enfermé à distance radiale par un boîtier de support hydraulique (9), dans lequel des membranes (11) en matériau présentant l'élasticité du caoutchouc sont agencées dans l'intervalle (10) formé par la distance, lesdites membranes délimitant des chambres à fluide (12), dans lequel le support hydraulique (1) présente une direction de travail (3) et est susceptible d'être chargé, pendant son utilisation conforme à sa destination, par une première force (4) d'une précharge statique (5), dans lequel l'élément de compensation de précharge (2) présente, pendant son utilisation conforme à sa destination, une seconde force (6) agissant à l'encontre de la première force (4) de la précharge statique (5), dans lequel la première (4) et la seconde (6) force agissant l'une contre l'autre sont sensiblement de même taille et dans lequel l'élément de compensation de précharge (2) est formé par un ressort additionnel (13),
**caractérisé en ce que** le ressort additionnel (13) est formé par un ressort conique (15) avec un noyau de support conique (15), et **en ce que** le noyau de support conique (16) et le noyau de support hydraulique (8) sont reliés par coopération de forces.

2. Agencement de support hydraulique selon la revendication 1, **caractérisé en ce que** le support hydraulique (1) et l'élément de compensation de précharge (2) sont agencés axialement au voisinage l'un de l'autre.

3. Agencement de support hydraulique selon l'une des revendications 1 ou 2, **caractérisé en ce que** le ressort additionnel (13) est en un matériau présentant l'élasticité du caoutchouc.

4. Agencement de support hydraulique selon l'une des revendications 1 à 3, **caractérisé en ce que** le noyau de support conique (16) est agencé, pour des raisons de fabrication, de façon stationnaire dans le noyau de support hydraulique (8).

5. Agencement de support hydraulique selon l'une des revendications 1 à 4, **caractérisé en ce que** la direction de travail (3) du support hydraulique (1) et la direction (17) de la première force (4) de la précharge statique (5) sont égales ou perpendiculaires l'une à l'autre.

6. Utilisation d'un agencement de support hydraulique selon l'une des revendications 1 à 5 à titre de support de montage d'essieu arrière dans des véhicules automobiles.
